# EUROPEAN PATENT SPECIFICATION

(11) **EP 3 549 744 B1**
(45) Date of publication and mention of the grant of the patent: **07.10.2020**
(21) Application number: 19166888.8
(22) Date of filing: 02.04.2019
(51) Int. Cl.: B29C 49/42, B29C 49/68, B29C 49/06, B29L 31/00

(54) **OVEN FOR PREFORMS**
OFEN FÜR VORFORMEN
FOUR POUR PRÉFORMES

(30) Priority: 05.04.2018 IT 201800004215
(43) Date of publication of application: 09.10.2019
(73) Proprietor: Smi S.P.A. Con Socio Unico, 24121 Bergamo (IT)
(72) Inventor: NAVA, Angelo, 24121 Bergamo (IT)
(74) Representative: Long, Giorgio

(56) References cited:
- EP-A2- 2 574 445
- DE-A1- 19 906 309
- DE-A1-102012 107 961

## Description

The present invention relates to an oven for preforms, and in particular to a system for handling the preforms when transferring them to the and from the oven. Ovens for preforms from the related prior art are described in EP2574445A2, DE19906309A1 and DE102012107961A1.

Obtaining containers by blowing special preforms made of plastic material, conveniently heated, inside a mold of the desired shape, is a commonly used technique in the field of packaging, particularly for manufacturing bottles for drinks.

There are basically two different techniques, simple blowing and stretch-blowing, which includes the pneumatic blowing and simultaneous mechanical stretching of the preform in the mold. In both cases, the preforms must reach the blowing or stretch-blowing machine in a thermal condition corresponding to the softening point of the material, in order to be plastically deformed inside the molds.

The softening of the preforms is actuated in special ovens, which comprise a series of heating modules, typically infrared modules arranged in series along the path of the preforms.

One critical aspect when manufacturing such ovens for preforms is the handling of the preforms themselves when transferring them to the oven from an upstream distribution star and when transferring them from the oven to the next step of blowing by means of a distribution star downstream of the oven. In fact, the pitch of the preforms inside the oven, particularly along the rectilinear stretches thereof where the heating elements are positioned, is as small as possible, while the pitch of the preforms onto the upstream and downstream transport means is greater. It is thus apparent that during the transfer of the preforms to and from the oven, a pitch change must occur, which needs to be as quick and precise as possible.

The problem addressed by the present invention consists in providing an oven for preforms, which comprises a system for handling the preforms entering and exiting the oven, which is precise, reliable and constructionally simple.

Such a problem is overcome by an oven for preforms, as defined in the appended claims, the definitions of which form an integral part of the present description.

Further features and advantages of the present invention will become more apparent from the description of some embodiments given below by way of non-limiting example, with reference to the following figures:
Figure 1 depicts a perspective view of the oven according to the invention;
Figure 2 depicts a top plan view of the oven in figure 1;
Figure 3 depicts a simplified perspective view of a detail of the oven in figure 1;
Figure 4 depicts a perspective view of the detail of the insertion zone of the spindles into the preforms;
Figure 5 depicts a bottom perspective view of the detail in figure 4;
Figure 6 depicts a top view perspective of the transfer zone of the preforms from the oven to the downstream distribution star;
Figures 7A and 7B depict top perspective views of the gripper for transferring the preform to and from the oven in two different operating steps;
Figures 8A and 8B depict sectional side views of the gripper in figures 7A and 7B, in the respective operating steps.

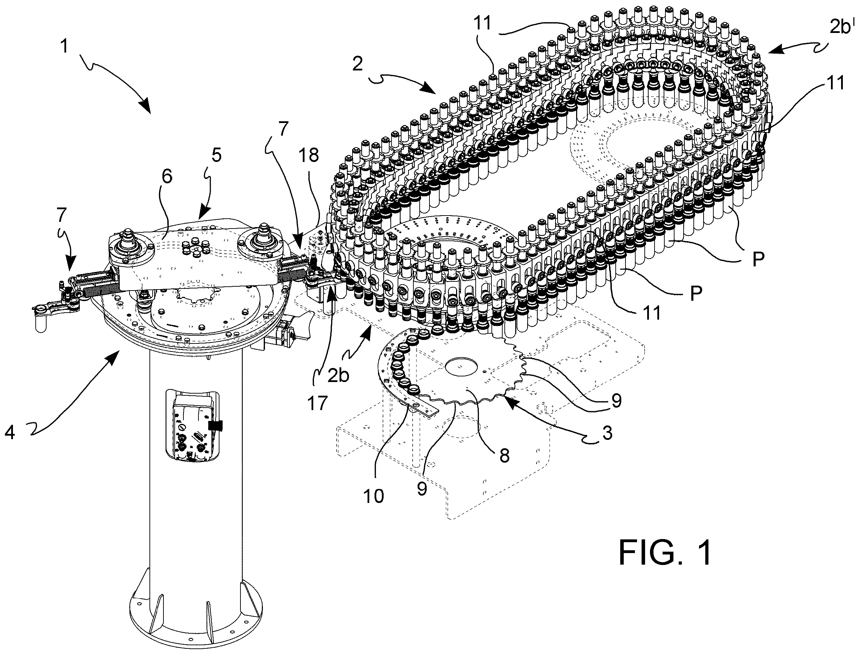

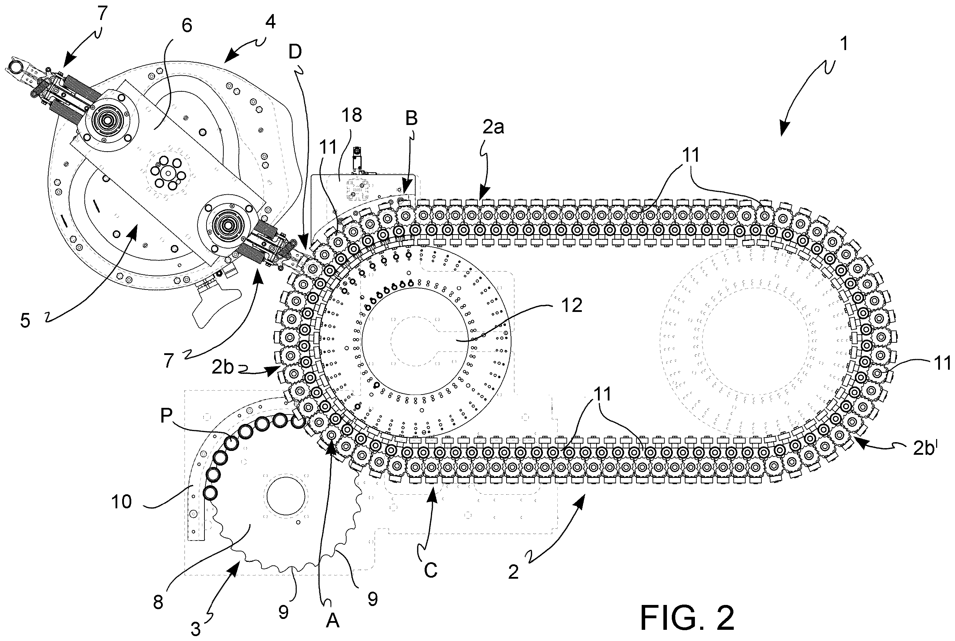

An oven for preforms according to the invention is shown in figures 1 and 2.

The oven for preforms P, indicated as a whole by reference numeral 1, comprises a path 2 for the preforms P, means 3 for transferring the preforms P from an upstream processing unit, for example by means of an upstream transport system (not shown), to the oven, and means 4 for transferring the heated preforms P from the oven 1 to a downstream processing unit, for example a blowing carousel or intermediate moving means (not shown).

Preferably, the transfer means 3, 4 are of the known type.

The transfer means 3, which supply the preforms P to be heated to the oven 1, comprise a rotating disk 8, along the periphery of which a plurality of cavities 9 is arranged. The transfer means 3 further comprise an arched contrast surface 10, arranged outside and opposing the rotating disk 8 along a circular sector corresponding to the path travelled by the preforms P by means of the upstream moving means (not shown) and the releasing point A of the preforms P on the path 2. The contrast surface 10 serves the function of keeping the preforms pressed against the surface of the cavities 9.

The transfer means 4 which collect the heated preforms from the path 2 of the oven 1 comprise a handling system 5, which, in the example shown, comprises a rotating plate 6 on which two gripper assemblies 7 are rotatably mounted, where the grippers are operated by means of convenient cams which cause the movement thereof, in a synchronized and combined manner according to a predetermined law of motion, and when the grippers are of the active type, the opening-closing of the respective jaws.

A plurality of spindles 11 is slidingly supported along the path 2, configured to be engaged temporarily with the preforms P in order to carry them along the path 2, where the preforms P will be heated up to the softening point thereof by means of convenient infrared heating units (not shown).

The path 2 of the preforms P typically comprises two rectilinear stretches 2a and two curvilinear stretches 2b, 2b', which join the rectilinear stretches 2a at the two ends following an arc-of-a-circle path. At the curvilinear stretches 2b, 2b' of the path 2, or at only one 2B of them, means for moving the spindles 11 are arranged, in particular a rotating driving wheel 12 which imparts the motion to the spindles 11, so that the spindles 11, along the rectilinear stretches, advance being driven by those upstream.

The spindles 11 travel along the path 2 in substantial contact with one another, but at the curvilinear stretches 2b the curvature of the path 2 causes the outer ends of the spindles 11 to move away. Considering that, as clearly shown in figure 1, the preforms P are supported at the outer end of the spindles 11, this causes a change in pitch of the preforms P when passing from the rectilinear stretches 2a to the curvilinear stretches 2b, particularly from the starting point B to the end point C of the curvilinear stretch 2b.

The spindles 11 are of the conventional type. A spindle 11 comprises a body 13 in which a gripping finger 14 for a preform P is slidingly inserted. The gripping finger 14 extends along a vertical axis X.

The gripping finger 14 comprises a gripping portion 14a, which protrudes downwards and is configured to be inserted into the cavity of a preform P so as to be engaged therewith, and an actuation portion 14b, which is at least partially inserted into the body 13 of the spindle 11.

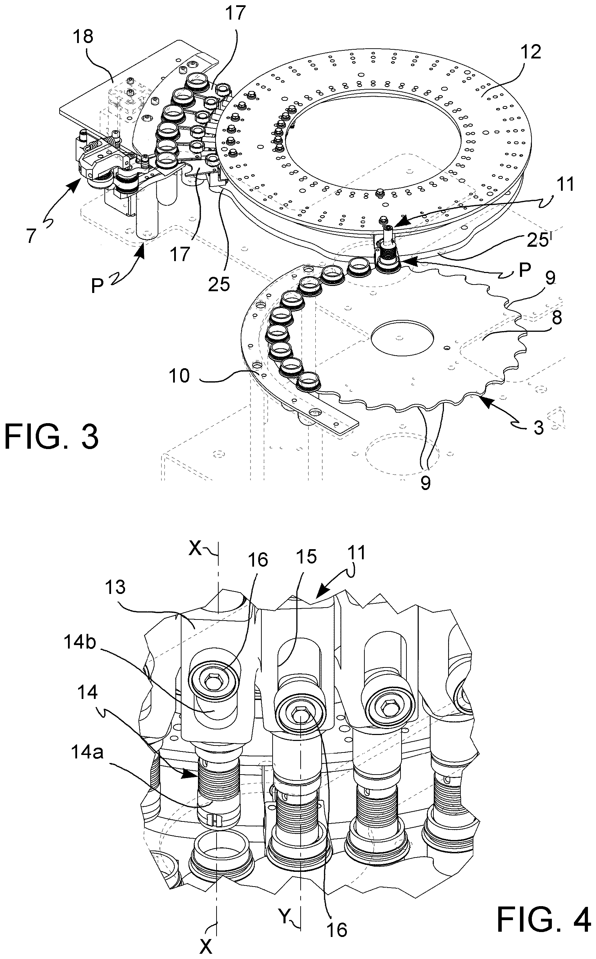

The gripping finger 14 is slidingly supported so as to move vertically between a retracted position (or releasing position of the spindle 11, the spindle being depicted on the left in figure 4) and a lowered position (or engaging position with the spindle 11, the spindles being on the right in figure 4). To this end, the body 13 has a vertically extended eyelet 15, from which a small wheel 16 which is integral with the actuation portion 14b of the gripping finger 14 and having a rotation axis Y perpendicular to the axis X of the gripping finger 14 protrudes. The small wheel 16 acts as a driven member of a cam (not shown), arranged in the engagement point (just downstream of the releasing point A of a preform P) of the spindle 11 with the preform P, and in the disengagement point (corresponding to the starting point B of the curvilinear stretch 2b) of the spindle 11 from the preform P.

A guide member (not shown) is further coupled to the body 13 of the spindle 11, typically a bearing, configured to slide on a special skid or track (not shown) positioned along the path 2. The plurality of spindles 11 is thus supported during the sliding movement along the path 2.

As can be seen from figure 2, the curvilinear stretch 2b of the path 2 arranged immediately upstream, along the direction of travel of the preforms P, of the gripping point D of the preforms P by the grippers 7 of the transfer means 4 comprises a contrast element 18. The contrast element 18 comprises a curvilinear surface which flanks the curvilinear stretch 2b on the outside thereof and extends from the starting point B of the curvilinear stretch 2b to the gripping point D of the preforms P by the grippers 7.

The oven 1 further comprises a plurality of transfer grippers 17 of the preforms P configured to assist the transfer of the preforms P from the upstream transfer means 3 to the path 2 of the oven 1 and from the path 2 to the downstream transfer means 4.

The transfer grippers 17 are associated with the driving wheel 12 and are arranged below every spindle 11, in order to follow the sliding movement thereof in the curvilinear stretch 2b of the path 2. Thereby, the pitch between one transfer gripper 17 and the next one is equal to the pitch of the preforms P in said curvilinear stretch 2b.

The transfer grippers 17 are extensible between a retracted position and an extended position, where, in said extended position, the transfer grippers 17 are configured to be engaged with a preform P so as to assist the transfer of the preform P, both from the upstream transfer means 3 to the releasing point A on the curvilinear stretch 2b of the path 2, and from the starting point B of the curvilinear stretch 2b to the gripping point D of the preforms P by the grippers 7 of the downstream transfer means 4.

In other words, the transfer grippers 17 operate so as to:
- keep the preform P pressed against the cavity 9 of the disk 8 between the releasing point A and the point in which the spindle 11 is engaged with the preform P, and
- keep the preform P pressed against the contrast element 18 between the starting point B of the curvilinear stretch 2b and the gripping point D of the preform by a gripper 7 of the downstream transfer means 4.

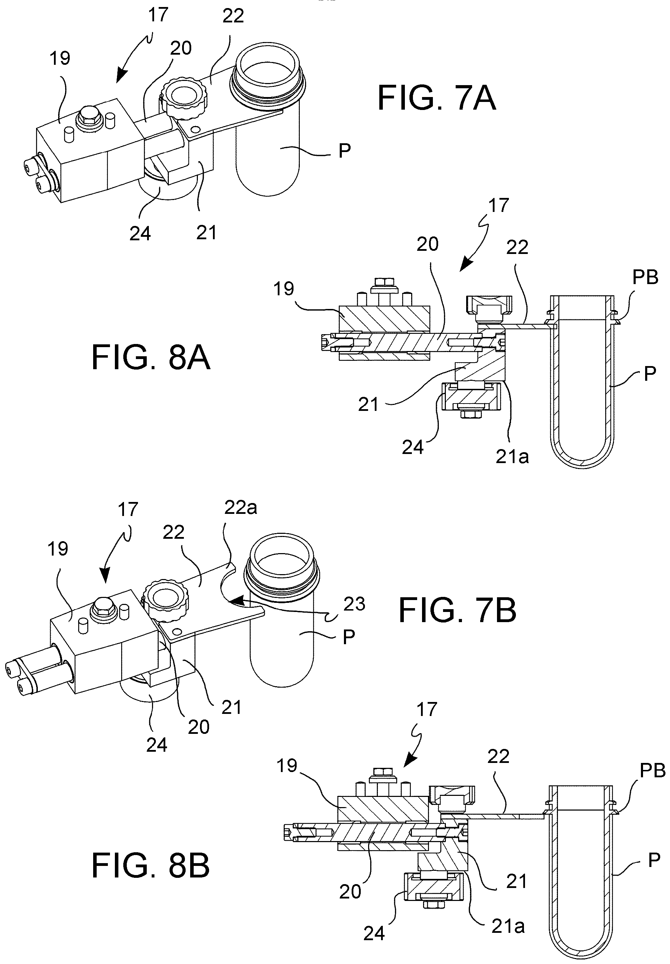

The transfer grippers 17 are shown in further detail in figures 7A-7B and 8A-8B. With reference to such figures, the transfer gripper 17 comprises a support body 19, which is configured to be fixed to the driving wheel 12 below a spindle 11, and an extensible member 20 sliding inside the support body 19. The extensible member 20 is preferably connected to elastic return means (not shown), which keep the extensible member 20 in the retracted position in figures 7B and 8B.

A connecting element 21 is fixed to the extensible member 20. The connecting element 21 can also be made in a single piece with the extensible member 20. An element 22 for engaging a preform P is mounted to the connecting element 21, preferably in a detachable manner.

The engaging element 22 comprises a plate on the distal end 22a of which a cavity 23 is obtained, configured to be engaged with a preform P, in particular with the surface of the preform P below the ring PB.

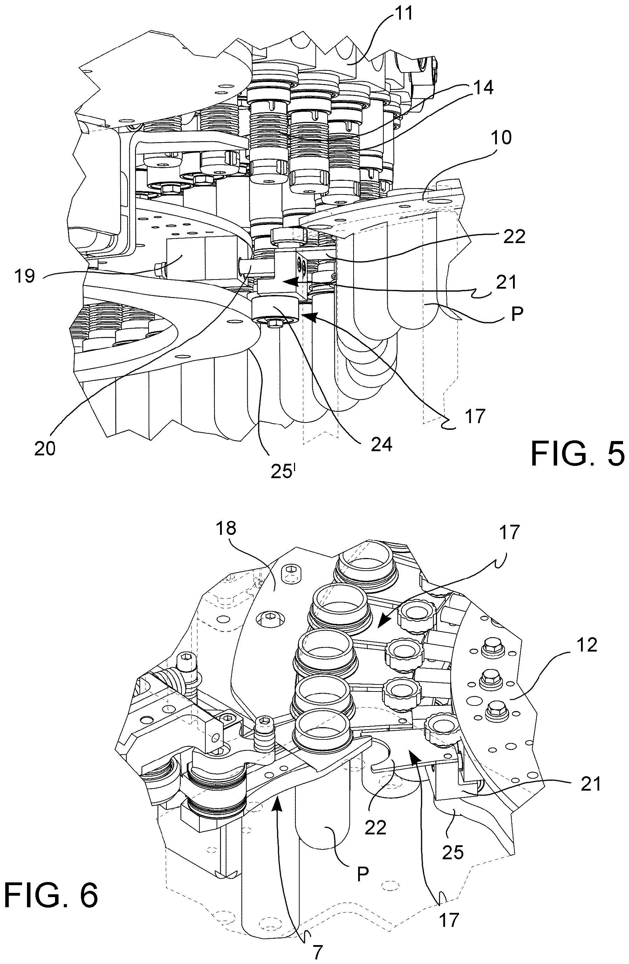

The connecting element 21 further comprises a small wheel or bearing 24, preferably arranged on a lower surface 21a of the connecting element 21. The small wheel or bearing 24 acts as a driven member of a cam, being configured to slide along the surface of cams 25, 25' (figures 3, 5 and 6) configured, in turn, to cause the transfer gripper 17 to take the extended position:
a) between the releasing point A of a preform P from the upstream transfer means 3 on the curvilinear stretch 2b of the path 2 and the point in which the spindle 11 is engaged with the preform P, and
b) between the starting point B of the curvilinear stretch 2b and the gripping point D of the preform by a gripper 7 of the downstream transfer means 4.

The presence of the extensible transfer grippers 17 in the oven 1 according to the invention thus allows the achieve an efficient system for handling the preforms, which is overall simpler than those of the prior art, especially due to the simplification of the transfer kinetics and therefore of the handling cams of the gripper 7, placed on the downstream transfer means 4 of the path 2.

It is apparent that only some particular embodiments of the present invention have been described, to which those skilled in the art can make all changes required for the adaption thereof to specific applications, without departing from the scope of protection of the present invention as defined in the appended claims.

## Claims

1. An oven (1) for preforms (P), comprising a path (2) comprising a plurality of spindles (11), configured to be engaged with the preforms (P), upstream transfer means (3) for transferring the preforms (P) from an upstream processing unit to the path (2), downstream transfer means (4) for transferring the preforms (P) heated by the oven (1) to a downstream processing unit, and heating means for the preforms (P) arranged along the path (2), wherein said upstream transfer means (3) comprise a rotating disk (8), along the periphery of which a plurality of cavities (9) adapted to be engaged with said preforms (P) is arranged, and said downstream transfer means (4) comprise one or more grippers (7) and wherein the path (2) comprises rectilinear stretches (2a) and curvilinear stretches (2b) and wherein the curvilinear stretch (2b) of the path (2) placed at said transfer means (3, 4) comprises a driving wheel (12) for said spindles (11), **characterized in that** the driving wheel (12) comprises a plurality of extensible transfer grippers (17) for the preforms (P), configured to assist the transfer of the preforms (P) from the upstream transfer means (3) to the path (2), and from the path (2) to the downstream transfer means (4).

2. The oven (1) according to claim 1, wherein the transfer grippers (17) are arranged below each spindle (11), with the same pitch as the preforms (P) along the curvilinear stretch (2b), so as to follow the sliding thereof.

3. The oven (1) according to claim 1 or 2, wherein the path (2) comprises, in the order according to the sliding direction of the spindles (11), a starting point (B) of the curvilinear stretch (2b), a gripping point (D) of the preforms (P) by the downstream transfer means (4), a releasing point (A) of the preforms (P) by the upstream transfer means (3), and an end point (C) of the curvilinear stretch (2b) and wherein the transfer grippers (17) are extensible between a retracted position and an extended position, wherein, in said extended position, the transfer grippers (17) are configured to be engaged with a preform (P) so as to assist the transfer of the preform (P) both from the upstream transfer means (3) to the releasing point (A) on the curvilinear stretch (2b) and from the starting point (B) of the curvilinear stretch (2b) to the gripping point (D) of the preforms (P) by the grippers (7) of the downstream transfer means (4).

4. The oven (1) according to claim 3, comprising a contrast element (18) having a curvilinear surface, which flanks the curvilinear stretch (2b) on the outside thereof and runs from the starting point (B) of the curvilinear stretch (2b) to the gripping point (D) of the preforms (P) by the grippers (7) of the downstream transfer means (4).

5. The oven (1) according to claim 3 or 4, wherein the extensible transfer grippers (17) are configured to:
- keep the preform (P) pressed against the cavity (9) of the disk (8) between the releasing point (A) and the point in which the spindle (11) is engaged with the preform (P), and
- keep the preform (P) pressed against the contrast element (18) between the starting point (B) of the curvilinear stretch (2b) and the gripping point (D) of the preform (P) by a gripper (7) of the downstream transfer means (4).

6. The oven (1) according to any one of the claims from 1 to 5, wherein the transfer grippers (17) comprise a support body (19), which is configured to be fixed to the driving wheel (12) below a spindle (11), and an extensible member (20) sliding inside the support body (19).

7. The oven (1) according to claim 6, wherein the extensible member (20) is connected to elastic return means which keep the extensible member (20) in a retracted position.

8. The oven (1) according to claim 6 or 7, wherein a connecting element (21) is fixed to, or made in a single piece with, the extensible member (20), an element (22) for engaging the preform (P) being mounted to the connecting element (21), preferably in a detachable manner.

9. The oven (1) according to claim 8, wherein the engaging element (22) comprises a plate having a distal end (22a), on which a cavity (23) is obtained, configured to be engaged with a preform (P), preferably with a surface of the preform (P) below the ring (PB).

10. The oven (1) according to claim 9, wherein the connecting element (21) comprises a small wheel or bearing (24), which acts as a driven member of a cam, being configured to slide along the cam surface (25, 25') configured to cause the transfer gripper (17) to take the extended position:
a) between the transfer point (A) of a preform (P) from the upstream transfer means (3) on the curvilinear stretch (2b) of the path (2) and the point in which the spindle (11) is engaged with the preform (P), and
b) between the starting point (B) of the curvilinear stretch (2b) and the gripping point (D) of the preform (P) by a gripper (7) of the downstream transfer means (4).

## Patentansprüche

1. Ofen (1) für Vorformlinge (P), umfassend einen Pfad (2), welcher eine Mehrzahl von Spindeln (11) umfasst, welche dazu eingerichtet sind, mit den Vorformlingen (P) im Eingriff zu sein, stromaufwärtige Transfer-Mittel (3) zum Transferieren der Vorformlinge (P) von einer stromaufwärtigen Verarbeitungseinheit zu dem Pfad (2), stromabwärtige Transfer-Mittel (4) zum Transferieren der Vorformlinge (P), welche durch den Ofen (1) erwärmt worden sind, zu einer stromabwärtigen Verarbeitungseinheit, und Erwärmung-Mittel für die Vorformlinge (P), welche entlang des Pfades (2) angeordnet sind, wobei die stromaufwärtigen Transfer-Mittel (3) eine rotierende Scheibe (8) umfassen, entlang deren Umfangs eine Mehrzahl von Hohlräumen (9) angeordnet sind, welche dazu eingerichtet sind, mit den Vorformlingen (P) im Eingriff zu sein, und wobei die stromabwärtigen Transfer-Mittel (4) einen oder mehrere Greifer (7) umfassen, und wobei der Pfad (2) geradlinige Erstreckungen (2a) und gekrümmte Erstreckungen (2b) umfasst, und wobei die gekrümmte Erstreckung (2b) des Pfades (2), welche an den Transfer-Mitteln (3, 4) platziert ist, ein antreibendes Rad (12) für die Spindeln (11) umfasst,
**dadurch gekennzeichnet, dass** das antreibende Rad (12) eine Mehrzahl von erweiterbaren Transfer-Greifern (17) für die Vorformlinge (P) umfasst, welche dazu eingerichtet sind, den Transfer der Vorformlinge (P) von den stromaufwärtigen Transfer-Mitteln (3) zu dem Pfad (2) und von dem Pfad (2) zu den stromabwärtigen Transfer-Mitteln (4) zu unterstützen.

2. Ofen (1) nach Anspruch 1, wobei die Transfer-Greifer (17) unter jeder Spindel (11) mit der gleichen Steigung wie die Vorformlinge (P) entlang der gekrümmten Erstreckung (2b) angeordnet sind, um dem Gleiten davon zu folgen.

3. Ofen (1) nach Anspruch 1 oder 2, wobei der Pfad (2) in der Reihenfolge gemäß der Gleitrichtung der Spindeln (11) einen Startpunkt (B) der gekrümmten Erstreckung (2b), einen Greif-Punkt (D) der Vorformlinge (P) durch die stromabwärtigen Transfer-Mittel (4), einen Freigabe-Punkt (A) der Vorformlinge (P) durch die stromaufwärtigen Transfer-Mittel (3) und einen Endpunkt (C) der gekrümmten Erstreckung (2b) umfasst, und wobei die Transfer-Greifer (17) zwischen einer zurückgezogenen Position und einer ausgefahrenen Position erweiterbar sind, wobei in der ausgefahrenen Position die Transfer-Greifer (17) dazu eingerichtet sind, mit einem Vorformling (P) im Eingriff zu sein, um den Transfer des Vorformlings (P) sowohl von den stromaufwärtigen Transfer-Mitteln (3) zu dem Freigabe-Punkt (A) an der gekrümmten Erstreckung (2b) als auch von dem Startpunkt (B) der gekrümmten Erstreckung (2b) zu dem Greif-Punkt (D) der Vorformlinge (P) durch die Greifer (7) der stromabwärtigen Transfer-Mittel (4) zu unterstützen.

4. Ofen (1) nach Anspruch 3, umfassend ein Kontrastelement (18), welches eine gekrümmte Fläche aufweist, welche die gekrümmte Erstreckung (2b) an der Außenseite davon flankiert und von dem Startpunkt (B) der gekrümmten Erstreckung (2b) zu dem Greif-Punkt (D) der Vorformlinge (P) durch die Greifer (7) der stromabwärtigen Transfer-Mittel (4) verläuft.

5. Ofen (1) nach Anspruch 3 oder 4, wobei die erweiterbaren Transfer-Greifer (17) dazu eingerichtet sind:
- den Vorformling (P), welcher gegen den Hohlraum (9) der Scheibe (8) gedrückt ist, zwischen dem Freigabe-Punkt (A) und dem Punkt zu halten, in welchem die Spindel (11) mit dem Vorformling (P) im Eingriff steht, und
- den Vorformling (P), welcher gegen das Kontrastelement (18) gedrückt ist, zwischen dem Startpunkt (B) der gekrümmten Erstreckung (2b) und dem Greif-Punkt (D) des Vorformlings (P) durch einen Greifer (7) der stromabwärtigen Transfer-Mittel (4) zu halten.

6. Ofen (1) nach einem der vorhergehenden Ansprüche von 1 bis 5, wobei die Transfer-Greifer (17) einen Halterung-Körper (19), welcher dazu eingerichtet ist, an dem antreibenden Rad (12) unter einer Spindel (11) befestigt zu sein, und ein erweiterbares Element (20) umfassen, welches innerhalb des Halterung-Körpers (19) gleitet.

7. Ofen (1) nach Anspruch 6, wobei das erweiterbare Element (20) mit elastischen Rückkehr-Mitteln verbunden ist, welche das erweiterbare Element (20) in einer zurückgezogenen Position halten.

8. Ofen (1) nach Anspruch 6 oder 7, wobei ein Verbindungselement (21) an dem erweiterbaren Element (20) befestigt ist oder damit einstückig ausgebildet ist, wobei ein Element (22) zum Eingreifen des Vorformlings (P) an dem Verbindungselement (21), vorzugsweise in einer lösbaren Weise, angebracht ist.

9. Ofen (1) nach Anspruch 8, wobei das Eingriffselement (22) eine Platte umfasst, welche ein distales Ende (22a) aufweist, an welchem ein Hohlraum (23) erhalten wird, welcher dazu eingerichtet ist, mit einem Vorformling (P), vorzugsweise mit einer Fläche des Vorformlings (P) unter dem Ring (PB), im Eingriff zu sein.

10. Ofen (1) nach Anspruch 9, wobei das Verbindungselement (21) ein kleines Rad oder eine Lagerung (24) umfasst, welche als ein angetriebenes Element eines Nockens wirkt, dazu eingerichtet, entlang der Nockenfläche (25, 25') zu gleiten, welche dazu eingerichtet ist, den Transfer-Greifer (17) zu veranlassen, die ausgefahrene Position einzunehmen:
a) zwischen dem Transfer-Punkt (A) eines Vorformlings (P) von den stromaufwärtigen Transfer-Mitteln (3) an der gekrümmten Erstreckung (2b) des Pfades (2) und dem Punkt, in welchem die Spindel (11) mit dem Vorformling (P) eingegriffen ist, und
b) zwischen dem Startpunkt (B) der gekrümmten Erstreckung (2b) und dem Greif-Punkt (D) des Vorformlings (P) durch einen Greifer (7) der stromabwärtigen Transfer-Mittel (4).

## Revendications

1. Four (1) pour préformes (P), comprenant un trajet (2) comprenant une pluralité de broches (11), configurée pour venir en prise avec les préformes (P), des moyens de transfert amont (3) pour transférer les préformes (P) depuis une unité de traitement amont vers le trajet (2), des moyens de transfert aval (4) pour transférer les préformes (P) chauffées par le four (1) vers une unité de traitement aval, et des moyens de chauffage pour les préformes (P) agencés le long du trajet (2), dans lequel lesdits moyens de transfert amont (3) comprennent un disque rotatif (8), le long de la périphérie duquel une pluralité de cavités (9) adaptée pour venir en prise avec lesdites préformes (P) est agencée, et lesdits moyens de transfert aval (4) comprennent une ou plusieurs pinces (7) et dans lequel le trajet (2) comprend des tronçons rectilignes (2a) et des tronçons curvilignes (2b) et dans lequel le tronçon curviligne (2b) du trajet (2) placé au niveau desdits moyens de transfert (3, 4) comprend une roue d'entraînement (12) pour lesdites broches (11), **caractérisé en ce que** la roue d'entraînement (12) comprend une pluralité de pinces de transfert extensibles (17) pour les préformes (P), configurée pour aider le transfert des préformes (P) depuis les moyens de transfert amont (3) vers le trajet (2), et depuis le trajet (2) vers les moyens de transfert aval (4).

2. Four (1) selon la revendication 1, dans lequel les pinces de transfert (17) sont agencées sous chaque broche (11), avec le même pas que les préformes (P) le long du tronçon curviligne (2b), de manière à suivre le glissement de celles-ci.

3. Four (1) selon la revendication 1 ou 2, dans lequel le trajet (2) comprend, dans l'ordre selon la direction de glissement des broches (11), un point de départ (B) du tronçon curviligne (2b), un point de préhension (D) des préformes (P) par les moyens de transfert aval (4), un point de libération (A) des préformes (P) par les moyens de transfert amont (3), et un point final (C) du tronçon curviligne (2b) et dans lequel les pinces de transfert (17) sont extensibles entre une position rétractée et une position déployée, dans lequel, dans ladite position déployée, les pinces de transfert (17) sont configurées pour être en prise avec une préforme (P) de manière à aider le transfert de la préforme (P) à la fois depuis les moyens de transfert amont (3) vers le point de libération (A) sur le tronçon curviligne (2b) et depuis le point de départ (B) du tronçon curviligne (2b) vers le point de préhension (D) des préformes (P) par les pinces (7) des moyens de transfert aval (4).

4. Four (1) selon la revendication 3, comprenant un élément de contraste (18) ayant une surface curviligne, qui flanque le tronçon curviligne (2b) à l'extérieur de celui-ci et va du point de départ (B) du tronçon curviligne (2b) au point de préhension (D) des préformes (P) par les pinces (7) des moyens de transfert aval (4).

5. Four (1) selon la revendication 3 ou 4, dans lequel les pinces de transfert extensibles (17) sont configurées pour :
- maintenir la préforme (P) pressée contre la cavité (9) du disque (8) entre le point de libération (A) et le point où la broche (11) est en prise avec la préforme (P), et
- maintenir la préforme (P) pressée contre l'élément de contraste (18) entre le point de départ (B) du tronçon curviligne (2b) et le point de préhension (D) de la préforme (P) par une pince (7) des moyens de transfert aval (4).

6. Four (1) selon l'une quelconque des revendications 1 à 5, dans lequel les pinces de transfert (17) comprennent un corps de support (19), qui est configuré pour être fixé à la roue d'entraînement (12) sous une broche (11), et un élément extensible (20) coulissant à l'intérieur du corps de support (19).

7. Four (1) selon la revendication 6, dans lequel l'élément extensible (20) est relié à des moyens de rappel élastiques qui maintiennent l'élément extensible (20) dans une position rétractée.

8. Four (1) selon la revendication 6 ou 7, dans lequel un élément de raccordement (21) est fixé à, ou fait d'une seule pièce avec, l'élément extensible (20), un élément (22) pour venir en prise avec la préforme (P) étant monté sur l'élément de raccordement (21), de préférence de manière détachable.

9. Four (1) selon la revendication 8, dans lequel l'élément de mise en prise (22) comprend une plaque ayant une extrémité distale (22a), sur laquelle une cavité (23) est obtenue, configurée pour être mise en prise avec une préforme (P), de préférence avec une surface de la préforme (P) sous la bague (PB).

10. Four (1) selon la revendication 9, dans lequel l'élément de raccordement (21) comprend une petite roue ou un petit palier (24), qui joue le rôle d'élément entraîné d'une came, étant configuré pour coulisser le long de la surface de came (25, 25') configurée pour amener la pince de transfert (17) à prendre la position déployée :
a) entre le point de transfert (A) d'une préforme (P) depuis les moyens de transfert amont (3) sur le tronçon curviligne (2b) du trajet (2) et le point où la broche (11) est en prise avec la préforme (P), et
b) entre le point de départ (B) du tronçon curviligne (2b) et le point de préhension (D) de la préforme (P) par une pince (7) des moyens de transfert aval (4).
